(19)

**Europäisches Patentamt**
**European Patent Office**
**Office européen des brevets**

(11)　**EP 4 671 713 A1**

(12)　**EUROPEAN PATENT APPLICATION**

(43) Date of publication:
　　 **31.12.2025  Bulletin 2026/01**

(21) Application number: **25184544.2**

(22) Date of filing: **23.06.2025**

(51) International Patent Classification (IPC):
　　 **G01K 7/01** $^{(2006.01)}$

(52) Cooperative Patent Classification (CPC):
　　 **G01K 7/01;** G01K 2219/00

(84) Designated Contracting States:
　　 **AL AT BE BG CH CY CZ DE DK EE ES FI FR GB
　　 GR HR HU IE IS IT LI LT LU LV MC ME MK MT NL
　　 NO PL PT RO RS SE SI SK SM TR**
　　 Designated Extension States:
　　 **BA**
　　 Designated Validation States:
　　 **GE KH LA MA MD TN**

(30) Priority: **26.06.2024  US 202463664567 P
　　　　　　　 18.06.2025  US 202519242742**

(71) Applicant: **Analog Devices, Inc.
　　 Wilmington, MA 01887 (US)**

(72) Inventors:
　 • **MAYES, Michael Keith
　　 Wilmington, 01887 (US)**
　 • **BLISS, David Edward
　　 Wilmington, 01887 (US)**
　 • **KAPLAN, Todd Stuart
　　 Wilmington, 01887 (US)**

(74) Representative: **Wallin, Nicholas James
　　 Withers & Rogers LLP
　　 2 London Bridge
　　 London SE1 9RA (GB)**

(54)　**TECHNIQUES FOR CURRENT SOURCE ERROR CANCELLATION IN TEMPERATURE SENSOR**

(57)　　Various techniques are described to accurately measure a ratio between the two currents supplied by a current source in a BJT temperature sensor. In an approach, a resistor is included between the current source and the emitter terminal of the BJT. An analog-to-digital converter (ADC) measures the voltage across the resistor R for each of the two currents. These voltages are used to determine current ratios, which are then used to determine a temperature of the BJT. The techniques are not limited to use with BJTs and are applicable to other semiconductor devices including diodes.

**FIG. 2**

**Description**

**CLAIM OF PRIORITY**

This application claims the benefit of priority to U.S. Provisional Application Serial No. 63/664,567, titled "TECHNIQUES FOR CURRENT SOURCE ERROR CANCELLATION IN BIPOLAR JUNCTION TRANSISTOR TEMPERATURE SENSOR" to Michael K. Mayes et al., filed June 26, 2024, which is incorporated by reference herein in its entirety.

**FIELD OF THE DISCLOSURE**

This document pertains generally, but not by way of limitation, to temperature sensor circuits.

**BACKGROUND**

Temperature sensing is an important function in numerous applications across various industries, including electronics, automotive, aerospace, and manufacturing. The ability to accurately measure temperature is important for monitoring and controlling processes, ensuring safety, and improving performance. Among the various technologies used for temperature measurement, Bipolar Junction Transistors (BJTs) have been widely adopted due to their sensitivity and the direct correlation between their electrical characteristics and temperature.

BJTs operate based on the movement of electrons and holes across a junction, which includes two types of semiconductor material: p-type and n-type. The voltage across the base-emitter junction of a BJT, denoted as $V_{BE}$, is particularly sensitive to temperature changes. This characteristic allows BJTs to function as effective temperature sensors by correlating shifts in $V_{BE}$ with temperature variations.

In some BJT-based temperature sensing circuits, two currents are applied to the emitter and the corresponding $V_{BE}$ is measured for each current. The difference in base-emitter voltage at different currents, often represented as $\Delta V_{BE}$, is used to calculate the temperature. This method exploits the exponential relationship between the junction voltage and the current through the device, which is described by the diode equation.

**SUMMARY OF THE DISCLOSURE**

This disclosure describes various techniques to accurately measure a ratio between the two currents supplied by a current source in a BJT temperature sensor. In an approach, a resistor is included between the current source and the emitter terminal of the BJT. An analog-to-digital converter (ADC) measures the voltage across the resistor R for each of the two currents. These voltages are used to determine current ratios, which are then used to determine a temperature of the BJT. The techniques are not limited to use with BJTs and are applicable to other semiconductor devices including diodes.

In some aspects, this disclosure is directed to a temperature sensor device for determining a temperature of a semiconductor device, the temperature sensor device comprising: a programmable current source configured for generating a first current and a second current; a first analog-to-digital converter having inputs coupled with a first terminal and a second terminal of the semiconductor device and configured for determining a first p-n junction difference voltage in response to the first current and a second p-n junction difference voltage in response to the second current; and a control circuit configured for: receiving a representation of the first current, a representation of the second current, the first p-n junction difference voltage, and the second p-n junction difference voltage; determining a temperature of the semiconductor device using: a ratio of the representation of the first current and the representation of the second current; the first p-n junction difference voltage; and the second p-n junction difference voltage; and generating an output signal representing the determined temperature.

In some aspects, this disclosure is directed to a method of sensing a temperature of a semiconductor device, the method comprising: generating a first current and a second current; generating, using a first analog-to-digital converter, a first p-n junction difference voltage in response to the first current and a second p-n junction difference voltage in response to the second current; receiving a representation of the first current, a representation of the second current, the first p-n junction difference voltage, and the second p-n junction difference voltage; determining the temperature of the semiconductor device using: a ratio of the representation of the first current and the representation of the second current; the first p-n junction difference voltage; and the second p-n junction difference voltage; and generating an output signal representing the determined temperature of the semiconductor device

In some aspects, this disclosure is directed to a temperature sensor device for determining a temperature of a diode having an anode and a cathode, the temperature sensor device comprising: a programmable current source configured for generating a first current and a second current; a first analog-to-digital converter having inputs coupled with the anode and the cathode and configured for determining a first difference voltage in response to the first current and a second difference voltage in response to the second current; and a control circuit configured for: receiving a representation of the first current, a representation of the second current, the first difference voltage, and the second difference voltage; determining a temperature of the diode using: a ratio of the representation of the first current and the representation of the second current; the first difference voltage; and the second difference voltage; and generating an output signal representing the determined temperature of the diode.

## BRIEF DESCRIPTION OF THE DRAWINGS

In the drawings, which are not necessarily drawn to scale, like numerals may describe similar components in different views. The drawings illustrate generally, by way of example, but not by way of limitation, various embodiments discussed in the present document.

FIG. 1 depicts an example of a BJT coupled with a programmable current source.

FIG. 2 depicts an example of a circuit that includes a programmable current source coupled with a BJT.

FIG. 3 depicts an example of a temperature sensor device for determining a temperature of a BJT, in accordance with this disclosure.

FIG. 4 depicts an example of a temperature sensor device for determining a temperature of a diode, in accordance with this disclosure.

FIG. 5 depicts another example of a temperature sensor device for determining a temperature of a BJT.

FIG. 6 is a flow diagram of an example of a method 600 of sensing a temperature of a semiconductor device.

## DETAILED DESCRIPTION

The Bipolar Junction Transistor (BJT) is widely utilized as a temperature sensor. The fundamental concept involves shorting the base and collector terminals to ground and using a programmable current source to supply two different currents to the emitter terminal, measuring the corresponding base-emitter voltages ($V_{BE}$), and using their difference ($\Delta V_{BE}$) to compute the temperature of the BJT.
The present inventors have recognized that a significant challenge arises with BJT temperature sensors due to errors in the current source. If the current source does not deliver sufficiently accurate currents, then the ratio of these currents, which is used to determine the temperature of the BJT, is inaccurate. The inaccuracy of the current source affects the reliability of the temperature measurements. The present inventors have recognized a need to compensate for current source errors in BJT temperature measurement circuits.
This disclosure describes various techniques to accurately measure a ratio between the two currents supplied by a current source in a BJT temperature sensor. In an approach, a resistor is included between the current source and the emitter terminal of the BJT. An analog-to-digital converter (ADC) measures the voltage across the resistor R for each of the two currents. These voltages are used to determine current ratios, which are then used to determine a temperature of the BJT. The techniques are not limited to use with BJTs and are applicable to other semiconductor devices including diodes.

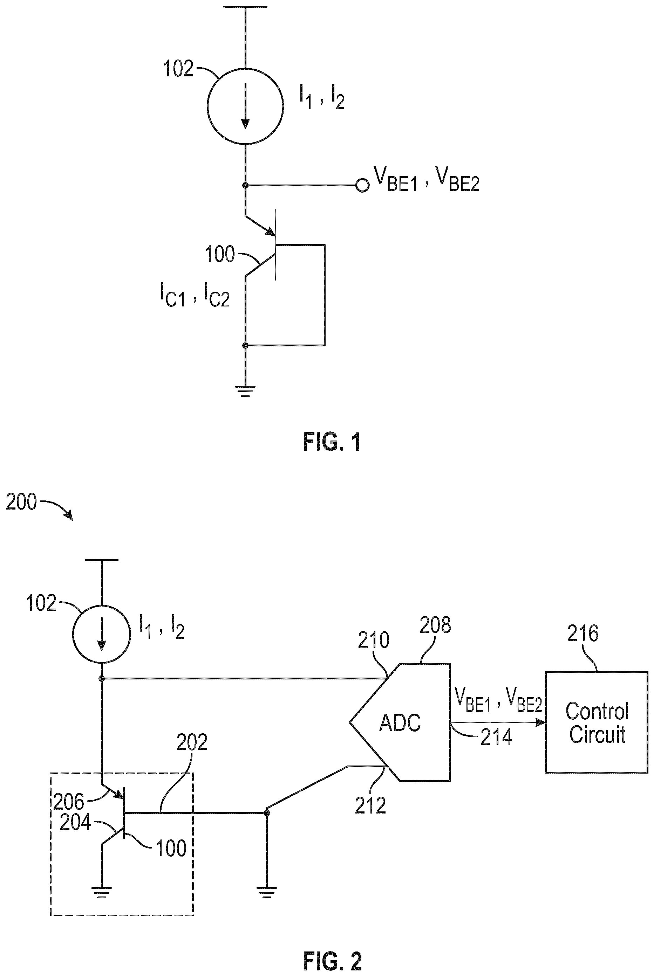

FIG. 1 depicts an example of a BJT 100 coupled with a programmable current source 102. In the example shown in FIG. 1, a programmable current source 102 is configured to apply two known currents $I_1$, $I_2$ to a terminal, e.g., the emitter, of the BJT 100 and a corresponding $V_{BE}$ is generated for each of those two currents, shown below in Equations 1 and 2:

$$V_{BE1} = \frac{kT}{q} \eta \ln\left(\frac{I_{c1}}{I_S}\right)$$

Eq. 1

$$V_{BE2} = \frac{kT}{q} \eta \ln\left(\frac{I_{c2}}{I_S}\right)$$

Eq. 2

As seen above in Equations 1 and 2, $V_{BE}$ is a function of Boltzmann's constant k, temperature T, the ideality factor

$\eta$, electron charge q, the collector currents $I_{C1}$, and $I_{C2}$, and the saturation current $I_S$.

A difference between the two voltages $V_{BE1}$ and $V_{BE2}$, or $\Delta V_{BE}$, is determined, and the temperature T of the BJT may be determined using the $\Delta V_{BE}$, shown below in Equations 3 and 4:

$$\Delta V_{BE} = V_{BE1} - V_{BE2} = \frac{kT}{q}\eta \ln\left(\frac{I_{c1}}{I_{c2}}\right) = \frac{kT}{q}\eta \ln\left(\frac{I_1}{I_2}\right)$$

Eq. 3

$$T = \frac{q\Delta V_{BE}}{\eta k \ln\left(\frac{I_1}{I_2}\right)}$$

Eq. 4

As seen in the temperature equation of Equation 4, the collector current and saturation current terms are no longer present and the temperature may be determined using the two known currents $I_1$ and $I_2$. The BJT shown in FIG. 1 is a diode-connected BJT, where the collector and base terminals are connected together and effectively shorted. In theory, the expected output of the current source is $I$. However, due to errors in the current source, the actual output is $\alpha I (\alpha \neq 1)$.

FIG. 2 depicts an example of a circuit 200 that includes a programmable current source 102 coupled with a BJT 100. The BJT 100 includes a base terminal 202, a collector terminal 204, and an emitter terminal 206.

In an existing approach, the programmable current source 102 supplies two known currents $I_1$, $I_2$ to the emitter terminal 206 of the BJT 100 and corresponding base-emitter voltages $V_{BE1}$ and $V_{BE2}$ are determined, as shown below in Equations 5 and 6:

$$I_1: V_{BE1} = \frac{kT}{q}\eta \ln\left(\frac{I_{c1}}{I_S}\right) = \frac{kT}{q}\eta \ln\left(\frac{\beta I_1}{(\beta+1)I_S}\right)$$

Eq. 5

$$I_2: V_{BE2} = \frac{kT}{q}\eta \ln\left(\frac{I_{c2}}{I_S}\right) = \frac{kT}{q}\eta \ln\left(\frac{\beta I_2}{(\beta+1)I_S}\right)$$

Eq. 6

As seen in FIG. 2, an analog-to-digital converter 208 has an input 210 coupled with the emitter terminal 206 and an input 212 coupled with the base terminal 202. The analog-to-digital converter 208 is configured for generating, at output 214, a first base-emitter difference voltage $V_{BE1}$ in response to the first current $I_1$ and a second base-emitter difference voltage $V_{BE2}$ in response to the second current $I_2$. The voltages $V_{BE1}$ and $V_{BE2}$ are applied to a control circuit 216.

Next, the control circuit 216 determines a difference between the two base-emitter voltages $V_{BE1}$ and $V_{BE2}$ to determine $\Delta V_{BE}$, as shown below in Eq. 7:

$$\Delta V_{BE} = V_{BE1} - V_{BE2} = \frac{kT}{q}\eta \ln\left(\frac{I_{c1}}{I_{c2}}\right) = \frac{kT}{q}\eta \ln\left(\frac{I_1}{I_2}\right)$$

Eq. 7

Then, the control circuit 216 solves for the temperature T to yield the following, shown as Equation 8:

$$\Rightarrow T = \frac{q\Delta V_{BE}}{\eta k \ln\left(\frac{I_1}{I_2}\right)}$$

Eq. 8

Due to current source errors, when current $I_1$ is expected, the actual emitter current $I_e = \alpha_1 I_1$. Similarly, when current $I_2$ is expected, the actual emitter current $I_e = \alpha_2 I_2$. This results in the following base-emitter voltages $V_{BE1}$ and $V_{BE2}$, shown in Equations 9 and 10:

$$I_1 : \quad V_{BE1} = \frac{kT}{q} \eta \ln\left(\frac{\alpha_1 \beta I_1}{(\beta+1) I_S}\right)$$

Eq. 9

$$I_2 : \quad V_{BE2} = \frac{kT}{q} \eta \ln\left(\frac{\alpha_2 \beta I_2}{(\beta+1) I_S}\right)$$

Eq. 10

The control circuit 216 determines a difference between the two base-emitter voltages $V_{BE1}$ and $V_{BE2}$ to determine $\Delta V_{BE}$, shown in Equation 11 below:

$$\Delta V_{BE} = V_{BE1} - V_{BE2} = \frac{kT}{q} \eta \ln\left(\frac{\alpha_1 I_1}{\alpha_2 I_2}\right)$$

Eq. 11

Then, the control circuit 216 solves for the temperature T to yield the following, shown as Equation 12:

$$\Rightarrow T = \frac{q \Delta V_{BE}}{\eta k \left[\ln\left(\frac{I_1}{I_2}\right) + \ln\left(\frac{\alpha_1}{\alpha_2}\right)\right]}$$

Eq. 12

In contrast to the temperature equation earlier (Equation 4), the temperature equation in Equation 12 includes a ratio of the error terms $\alpha_1$ and $\alpha_2$ in the denominator.

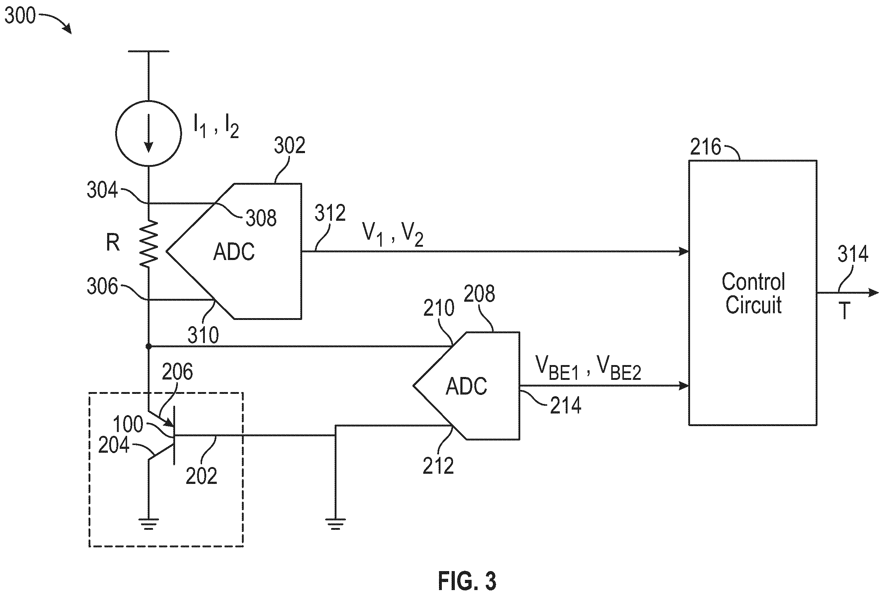

FIG. 3 depicts an example of a temperature sensor device 300 for determining a temperature of a BJT 100, in accordance with this disclosure. Like before, the temperature sensor device 300 includes a programmable current source 102 configured for generating two known currents $I_1$, $I_2$.

The temperature sensor device 300 includes an analog-to-digital converter 208 having an input 210 coupled with the emitter terminal 206 and an input 212 coupled with the base terminal 202. The analog-to-digital converter 208 is configured for generating, at output 214, a first base-emitter difference voltage $V_{BE1}$ in response to the first current $I_1$ and a second base-emitter difference voltage $V_{BE2}$ in response to the second current $I_2$. The first base-emitter difference voltage $V_{BE1}$ and the second base-emitter difference voltage are examples of p-n junction difference voltages because the base-emitter junction is an example of a p-n junction.

The voltages $V_{BE1}$ and $V_{BE2}$ are applied to a control circuit 216. It should be noted that although the base terminal 202 of the BJT 100 is depicted as being grounded in the example shown in FIG. 3, these techniques are not limited to such configurations.

Using the techniques of this disclosure, the temperature sensor device 300 of FIG. 3 includes a resistive element R having a terminal 304 and a terminal 306, where the terminal 304 is coupled with the programmable current source 102 and the terminal 306 is coupled with one of the base terminal 202, the collector terminal 204, or the emitter terminal 206. In the example shown in FIG. 3, the terminal 306 is coupled with the emitter terminal 206. The resistive element R refers to any structure or device that exhibits resistive behavior, including but not limited to integrated resistors or other structures configured to provide resistance within the circuit.

In addition, the temperature sensor device 300 includes another analog-to-digital converter 302 having input 308 and input 310 coupled across the resistive element R. The analog-to-digital converter 302 is configured for generating digital outputs of a representation of the current $I_1$ and a representation of the current $I_2$, such as voltages $V_1$, $V_2$ corresponding to the different currents $I_1$ and $I_2$, at an output 312.

The control circuit 216 is coupled with the output 214 of the analog-to-digital converter 208 and the output 312 of the analog-to-digital converter 302 and is configured for receiving their digital outputs of: a representation of the current $I_1$, a representation of the current $I_2$, the base-emitter difference voltage $V_{BE1}$, and the base-emitter difference voltage $V_{BE2}$.

The control circuit 216 determines the temperature T of the BJT 100 using Equations 13-16 as follows:

$$I_1 : V_{BE1} = \frac{kT}{q}\eta \ln\left(\frac{\beta V_1}{(\beta+1)RI_S}\right)$$

Eq. 13

$$I_2 : V_{BE2} = \frac{kT}{q}\eta \ln\left(\frac{\beta V_2}{(\beta+1)RI_S}\right)$$

Eq. 14

$$\Delta V_{BE} = \frac{kT}{q}\eta \ln\left(\frac{V_1}{V_2}\right)$$

Eq. 15

$$\Rightarrow T = \frac{q\Delta V_{BE}}{k\eta \ln\left(\frac{V_1}{V_2}\right)}$$

Eq. 16

As seen above, the ratio of error terms $\alpha_1$ and $\alpha_2$ in the denominator of the temperature Equation 16 has been eliminated using the techniques of this disclosure. The exact ratio of the currents $I_1$ and $I_2$ is $\frac{V_1}{V_2}$, which is computed from the voltages across the resistive element R. This technique eliminates the error caused by the programmable current source 102.

Using these techniques and as seen in Equation 16, the control circuit 216 determines the temperature T of the BJT 100 using a ratio of the representation of the current $I_1$ and the representation of the current $I_2$, such as $\frac{V_1}{V_2}$; the base-emitter difference voltage $V_{BE1}$; and the base-emitter difference voltage $V_{BE2}$, shown as $\Delta V_{BE}$. The control circuit 216 is configured for generating an output signal 314 representing the determined temperature T, where the output signal 314 is a digital representation of the temperature.

The output signal 314 of the temperature sensor device 300 represents the temperature of the BJT 100. Because the BJT 100 could be thermally coupled to an integrated circuit (IC) substrate, its temperature would correspond closely to the temperature of the chip itself. The control circuit 216 may transmit the output signal 314 to an external system or control unit. In some examples, the external system or control unit may form part of a thermal management system, which may use the output signal 314 to regulate cooling mechanisms, such as adjusting fan speed or activating other temperature control elements, thereby helping to maintain the chip within an optimal operating temperature range.

Although the techniques have been described with respect to coupling the resistive element R with the emitter terminal 206 of the BJT 100, as shown in FIG. 3, in other examples, the resistive element R may be coupled with the collector terminal or the base terminal. In addition, it should be noted that although this disclosure depicts PNP BJTs, the techniques are also applicable to NPN BJTs.

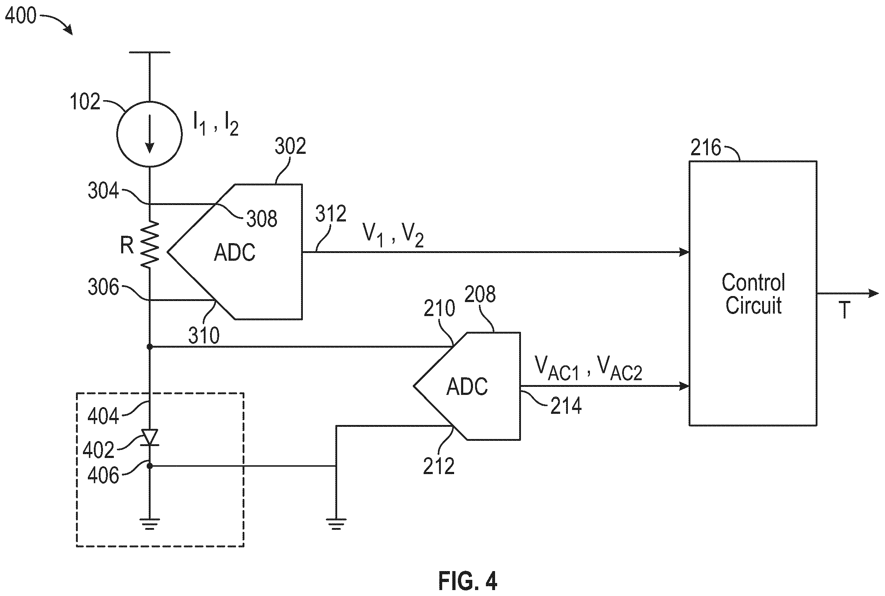

The techniques of this disclosure are also applicable to diodes, whether the diode is a 3-terminal diode-connected BJT or a 2-terminal diode. For a diode-connected BJT, the techniques of FIG. 3 and, in particular, the use of two different VBE voltages, are applicable. For a 2-terminal diode, the use of two different anode-cathode voltages is applicable. FIG. 4 depicts an example of a temperature sensor device that implements these techniques to measure the temperature of a 2-terminal diode.

FIG. 4 depicts another example of a temperature sensor device 400 for determining a temperature of a diode 402, in accordance with this disclosure. Many of the components in FIG. 4 are the same as those shown and described above with respect to FIG. 3. For brevity, such components will not be described again and the same reference numbers are used in FIG. 4.

The 2-terminal diode 402 includes an anode 404 and a cathode 406. Using the techniques and equations described above with respect to FIG. 3, the temperature sensor device 400 may determine the temperature of the diode 402. However, instead of using a difference between base-emitter difference voltages, the diode 402 uses a difference between anode-cathode first voltages.

Like before, the temperature sensor device 400 includes a programmable current source 102 configured for generating two known currents $I_1$, $I_2$.

The temperature sensor device 400 includes an analog-to-digital converter 208 having an input 210 coupled with the anode 404 and an input 212 coupled with the cathode 406. The analog-to-digital converter 208 is configured for generating, at output 214, a first anode-cathode difference voltage (or simply first difference voltage) $V_{AC1}$ in response to the first current $I_1$ and a second anode-cathode difference voltage (or simply second difference voltage) $V_{AC2}$ in response to the second current $I_2$. The first difference voltage $V_{AC1}$ and the second difference voltage $V_{AC2}$ are examples of p-n junction difference voltages because the anode-cathode junction is an example of a p-n junction. The difference voltages $V_{AC1}$ and $V_{AC2}$ are applied to a control circuit 216.

Like in FIG. 3, the temperature sensor device 400 of FIG. 4 includes a resistive element R having a terminal 304 and a terminal 306, where the terminal 304 is coupled with the programmable current source 102 and the terminal 306 is coupled with the anode 404. In addition, the temperature sensor device 400 includes an analog-to-digital converter 302 having input 308 and input 310 coupled across the resistive element R. The analog-to-digital converter 302 is configured for generating digital outputs of a representation of the current $I_1$ and a representation of the current $I_2$, such as voltages $V_1$, $V_2$ corresponding to the different currents $I_1$ and $I_2$, at an output 312.

The control circuit 216 is coupled with the output 214 of the analog-to-digital converter 208 and the output 312 of the analog-to-digital converter 302 and is configured for receiving their digital outputs of: a representation of the current $I_1$, a representation of the current $I_2$, the first difference voltage $V_{AC1}$, and the second difference voltage $V_{AC2}$.

The control circuit 216 determines the temperature T of the BJT 100 using Equations 12-15 above, but with $V_{BE1}$ and $V_{BE2}$ replaced by $V_{AC1}$ and $V_{AC2}$. As described earlier, the ratio of error terms $\alpha_1$ and $\alpha_2$ in the denominator of the temperature Equation 16 has been eliminated using the techniques of this disclosure. The exact ratio of the currents $I_1$ and $I_2$ is $\frac{V_1}{V_2}$, which is computed from the voltages across the resistive element R. This technique eliminates the error caused by the programmable current source 102.

Using these techniques and as seen in Equation 16, the control circuit 216 determines the temperature T of the diode 402 using a ratio of the representation of the current $I_1$ and the representation of the current $I_2$, such as $\frac{V_1}{V_2}$; the first difference voltage $V_{AC1}$; and the second difference voltage $V_{AC2}$. The control circuit 216 is configured for generating an output signal 314 representing the determined temperature T, where the output signal 314 is a digital representation of the temperature.

The output signal 314 of the temperature sensor device 400 represents the temperature of the diode 402. Because the diode 402 could be thermally coupled to an integrated circuit (IC) substrate, its temperature would correspond closely to the temperature of the chip itself. The control circuit 216 may transmit the output signal 314 to an external system or control unit. In some examples, the external system or control unit may form part of a thermal management system, which may use the output signal 314 to regulate cooling mechanisms, such as adjusting fan speed or activating other temperature control elements, thereby helping to maintain the chip within an optimal operating temperature range.

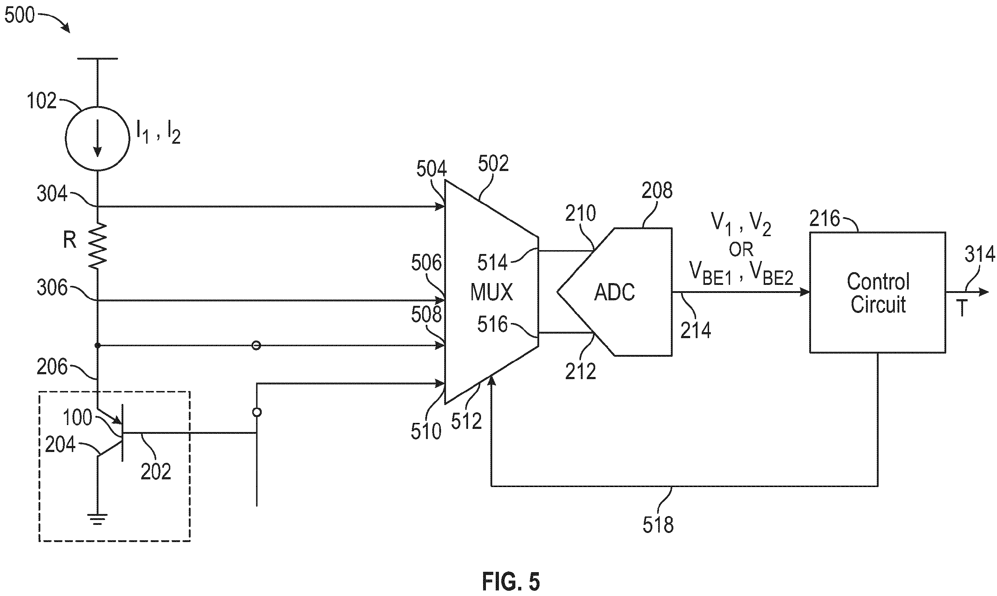

FIG. 5 depicts another example of a temperature sensor device 500 for determining a temperature of a BJT 100. The temperature sensor device 500 of FIG. 5 is similar to the temperature sensor device 300 of FIG. 3, except that a multiplexer 502 is used to reduce the number of analog-to-digital converters used. The multiplexer 502 includes four data inputs: data input 504, data input 506, data input 508, and data input 510. The multiplexer 502 includes one select input: select input 512.

The data input 504 of the multiplexer 502 is coupled with the terminal 304 of the resistive element R and the data input 506 of the multiplexer 502 is coupled with the terminal 306 of the resistive element R. The data input 508 of the multiplexer 502 is coupled with the emitter terminal 206 of the BJT 100 and the data input 510 of the multiplexer 502 is coupled with the base terminal 202.

The temperature sensor device 500 includes an analog-to-digital converter 208 having an input 210 coupled with an output 514 of the multiplexer 502 and an input 212 coupled with an output 516 of the multiplexer 502. The control circuit 216 is configured for generating a data select signal 518 that is applied to the select input 512 of the multiplexer 502. The data select signal 518 selects which pair of data inputs [(504, 506) or (508, 510)] to apply to the output 514 and the output 516 of the multiplexer 502, which are then applied to the input 210 and the input 212 of the analog-to-digital converter 208.

For example, when the control circuit 216 generates the data select signal 518 to select the data input 504 and the data input 506, the analog-to-digital converter 208 receives a representation of the current $I_1$ and a representation of the current $I_2$, such as voltages $V_1$, $V_2$ corresponding to the different currents $I_1$ and $I_2$. The analog-to-digital converter 302 is configured for generating digital outputs of a representation of the current $I_1$ and a representation of the current $I_2$, such as voltages $V_1$, $V_2$ corresponding to the different currents $I_1$ and $I_2$, at an output 214. The voltages $V_1$, $V_2$, for example, are applied to the control circuit 216.

When the control circuit 216 generates the data select signal 518 to select the data input 508 and the data input 510, the analog-to-digital converter 208 is configured for generating, at output 214, a first base-emitter difference voltage $V_{BE1}$ in response to the first current $I_1$ and a second base-emitter difference voltage $V_{BE2}$ in response to the second current

$I_2$. The voltages $V_{BE1}$ and $V_{BE2}$ are applied to a control circuit 216. By using the multiplexer 502, the temperature sensor device 500 of FIG. 5 is able to eliminate one of the two analog-to-digital converters of FIG. 3.

The control circuit 216 is coupled with the output 214 of the analog-to-digital converter 208 and the output 312 of the analog-to-digital converter 302 and is configured for receiving their digital outputs of: a representation of the current $I_1$, a representation of the current $I_2$, the base-emitter difference voltage $V_{BE1}$, and the base-emitter difference voltage $V_{BE2}$. As discussed above with respect to FIG. 3, the control circuit 216 determines the temperature T of the BJT 100 using Equations 12-15. The control circuit 216 determines the temperature T of the BJT 100 using a ratio of the representation of the current $I_1$ and the representation of the current $I_2$, such as $\frac{V_1}{V_2}$; the base-emitter difference voltage $V_{BE1}$; and the base-emitter difference voltage $V_{BE2}$, shown as $\Delta V_{BE}$.

The control circuit 216 is configured for generating an output signal 314 representing the determined temperature T, where the output signal 314 is a digital representation of the temperature. The output signal 314 of the temperature sensor device 300 represents the temperature of the BJT 100 and may be transmitted to an external system or control unit, as described above.

In some examples, the multiplexer 502 of FIG. 5 may be used with the diode 402 of FIG. 4. That is, the BJT 100 of FIG. 5 may be replaced with the diode 402 and the anode 404 and the cathode 406 may be coupled to the data input 508 and the data input 510, respectively. The control circuit 216 may then generate data select signal 518 to select the data inputs and determine the temperature of the diode 402, as described above.

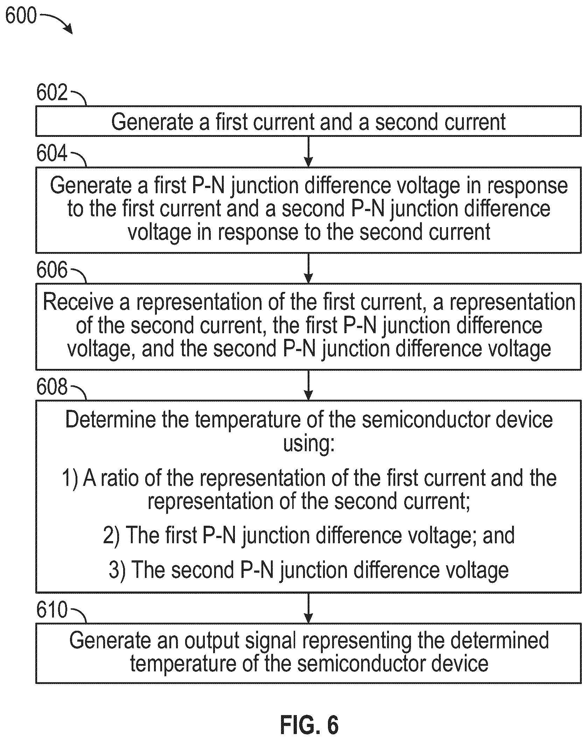

FIG. 6 is a flow diagram of an example of a method 600 of sensing a temperature of a semiconductor device. In some examples, the semiconductor device is a BJT, such as the BJT 100 of FIG. 3. In other examples, the semiconductor device is a diode, such as the diode 402 of FIG. 4.

At block 602, the method 600 includes generating a first current and a second current. For example, the programmable current source 102 of FIG. 3 generates currents $I_1$ and $I_2$.

At block 604, the method 600 includes generating a first p-n junction difference voltage in response to the first current and a second p-n junction difference voltage in response to the second current. For example, the analog-to-digital converter 208 of FIG. 3 generates voltage $V_{BE1}$ in response to current $I_1$ and voltage $V_{BE2}$ in response to $I_2$.

At block 606, the method 600 includes a representation of the first current, a representation of the second current, the first voltage, the first p-n junction difference voltage, and the second p-n junction difference voltage. For example, the control circuit 216 of FIG. 3 receives voltages $V_1$, $V_2$, and voltages $V_{BE1}$, $V_{BE2}$.

At block 608, the method 600 includes determining the temperature of the semiconductor device using: a ratio of the representation of the first current and the representation of the second current; the first p-n junction difference voltage; and the second p-n junction difference voltage. For example, the control circuit 216 determines the temperature of the BJT 100 of FIG. 3 using Equation 16.

At block 610, the method 600 includes generating an output signal representing the determined temperature of the semiconductor device. For example, the control circuit 216 generates the output signal 314 that represents the temperature of the BJT 100. In examples using a diode, the output signal 314 represents the temperature of the diode, such as the diode 402 of FIG. 4 or a diode-connected BJT.

Although the method 600 was described with respect to the BJT 100 of FIG. 3, the techniques are also applicable to temperature sensor devices that include diodes, such as the diode 402 of FIG. 4. The method 600 is also applicable to implementations that include a multiplexer, such as shown in FIG. 5.

In some examples, the semiconductor device is a bipolar junction transistor, the first p-n junction difference voltage is a first base-emitter difference voltage, and the second p-n junction difference voltage is a second base-emitter difference voltage.

In some examples, the method 600 includes coupling a first terminal of a resistive element with a programmable current source and a second terminal of the resistive element with one of a base terminal, a collector terminal, or an emitter terminal; and generating, using a second analog-to-digital converter having inputs coupled across the resistive element, the representation of the first current and the representation of the second current. In some examples, the first analog-to-digital converter and the second analog-to-digital converter are the same analog-to-digital converter, and the method 600 further includes coupling a multiplexer with inputs of the first analog-to-digital converter and with the first terminal of the resistive element, the second terminal of the resistive element, and the emitter terminal and selectively outputting signals from the multiplexer to the first analog-to-digital converter.

In some examples, generating, using the second analog-to-digital converter having inputs coupled across the resistive element, the representation of the first current and the representation of the second current includes: generating a first voltage in response to the first current and a second voltage in response to the second current. In some examples, determining a temperature of the semiconductor device using the ratio of the representation of the first current and the representation of the second current; the first p-n junction difference voltage; and the second p-n junction difference voltage includes: determining the temperature of the bipolar junction transistor using: 1) using a ratio of the first voltage and the second voltage; 2) the first base-emitter difference voltage; and 3) the second base-emitter difference voltage.

In some examples, the semiconductor device is a diode, the first p-n junction difference voltage is a first difference voltage between an anode and a cathode, and the second p-n junction difference voltage is a second difference voltage between the anode and the cathode.

Various Notes

Each of the non-limiting claims or examples described herein may stand on its own, or may be combined in various permutations or combinations with one or more of the other examples.

The above detailed description includes references to the accompanying drawings, which form a part of the detailed description. The drawings show, by way of illustration, specific embodiments in which the invention may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more claims thereof), either with respect to a particular example (or one or more claims thereof), or with respect to other examples (or one or more claims thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact discs and digital video discs), magnetic cassettes, memory cards or sticks, random access memories (RAMs), read only memories (ROMs), and the like.

The above description is intended to be illustrative, and not restrictive. For example, the above-described examples (or one or more claims thereof) may be used in combination with each other. Other embodiments may be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments may be combined with each other in various combinations or permutations. The scope of the invention should be determined with reference to the appended claims, along with the full scope of equivalents to which such claims are entitled.

Various Notes

Each of the non-limiting claims or examples described herein may stand on its own, or may be combined in various permutations or combinations with one or more of the other examples.

The above detailed description includes references to the accompanying drawings, which form a part of the detailed description. The drawings show, by way of illustration, specific embodiments in which the invention may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more claims thereof), either with respect to a particular example (or one or more claims thereof), or with respect to other examples (or one or more claims thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein may be machine or computer-implemented at least in part. Some examples may include a computer-readable medium or machine-readable medium encoded with instructions operable to configure an electronic device to perform methods as described in the above examples. An implementation of such methods may include code, such as microcode, assembly language code, a higher-level language code, or the like. Such code may include computer readable instructions for performing various methods. The code may form portions of computer program products. Further, in an example, the code may be tangibly stored on one or more volatile, non-transitory, or non-volatile tangible computer-readable media, such as during execution or at other times. Examples of these tangible computer-readable media may include, but are not limited to, hard disks, removable magnetic disks, removable optical disks (e.g., compact discs and digital video discs), magnetic cassettes, memory cards or sticks, random access memories (RAMs), read only memories (ROMs), and the like.

The above description is intended to be illustrative, and not restrictive. For example, the above-described examples (or one or more claims thereof) may be used in combination with each other. Other embodiments may be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments may be combined with each other in various combinations or permutations. The scope of the invention should be determined with reference to the appended claims, along with the full scope of equivalents to which such claims are entitled.

There follows a list of numbered features defining embodiments of the present disclosure. Where numbered feature refers to one or more earlier numbered features then those features should be considered together in combination with each other.

1. A temperature sensor device for determining a temperature of a semiconductor device, the temperature sensor device comprising:

a programmable current source configured for generating a first current and a second current;
a first analog-to-digital converter having inputs coupled with a first terminal and a second terminal of the semiconductor device and configured for determining a first p-n junction difference voltage in response to the first current and a second p-n junction difference voltage in response to the second current; and
a control circuit configured for:

receiving a representation of the first current, a representation of the second current, the first p-n junction difference voltage, and the second p-n junction difference voltage;
determining a temperature of the semiconductor device using:

a ratio of the representation of the first current and the representation of the second current;
the first p-n junction difference voltage; and
the second p-n junction difference voltage; and

generating an output signal representing the determined temperature.

2. The temperature sensor device of feature 1, wherein the semiconductor device is a bipolar junction transistor, wherein first p-n junction difference voltage is a first base-emitter difference voltage, and wherein the second p-n junction difference voltage is a second base-emitter difference voltage.

3. The temperature sensor device of feature 2, comprising:

a resistive element having a first terminal and a second terminal, wherein the first terminal is coupled with the programmable current source and the second terminal is coupled with one of a base terminal, a collector terminal, or an emitter terminal; and
a second analog-to-digital converter having inputs coupled across the resistive element and configured for generating the representation of the first current and the representation of the second current.

4. The temperature sensor device of feature 3, wherein the first analog-to-digital converter and the second analog-to-digital converter are the same analog-to-digital converter, the temperature sensor device further comprising:
a multiplexer coupled with the first terminal of the resistive element, the second terminal of the resistive element, the base terminal, and the emitter terminal and configured for selectively outputting signals to the first analog-to-digital converter.

5. The temperature sensor device of feature 3 or 4, wherein the representation of the first current is a first voltage and the representation of the second current is a second voltage.

6. The temperature sensor device of feature 5, wherein the control circuit configured for determining the temperature of the semiconductor device using the ratio of the representation of the first current and the representation of the second current; the first p-n junction difference voltage; and the second p-n junction difference voltage is configured for:
determining the temperature of the bipolar junction transistor using:

using a ratio of the first voltage and the second voltage,
the first base-emitter difference voltage; and
the second base-emitter difference voltage.

7. The temperature sensor device of any of features 3 to 6, wherein the second terminal of the resistive element is coupled with the emitter terminal.

8. The temperature sensor device of any of features 1 to 7, wherein the semiconductor device is a diode, wherein the first p-n junction difference voltage is a first difference voltage between an anode and a cathode, and wherein the second p-n junction difference voltage is a second difference voltage and the anode and the cathode.

9. A method of sensing a temperature of a semiconductor device, the method comprising:

generating a first current and a second current;
generating, using a first analog-to-digital converter, a first p-n junction difference voltage in response to the first current and a second p-n junction difference voltage in response to the second current;
receiving a representation of the first current, a representation of the second current, the first p-n junction difference voltage, and the second p-n junction difference voltage;
determining the temperature of the semiconductor device using:

a ratio of the representation of the first current and the representation of the second current;
the first p-n junction difference voltage; and
the second p-n junction difference voltage; and

generating an output signal representing the determined temperature of the semiconductor device.

10. The method of feature 9, wherein the semiconductor device is a bipolar junction transistor, wherein first p-n junction difference voltage is a first base-emitter difference voltage, and wherein the second p-n junction difference voltage is a second base-emitter difference voltage.

11. The method of feature 10, comprising:

coupling a first terminal of a resistive element with a programmable current source and a second terminal of the resistive element with one of a base terminal, a collector terminal, or an emitter terminal; and
generating, using a second analog-to-digital converter having inputs coupled across the resistive element, the representation of the first current and the representation of the second current.

12. The method of feature 11, wherein the first analog-to-digital converter and the second analog-to-digital converter are the same analog-to-digital converter, the method further comprising:

coupling a multiplexer with inputs of the first analog-to-digital converter and with the first terminal of the resistive element, the second terminal of the resistive element, and the emitter terminal; and
selectively outputting signals from the multiplexer to the first analog-to-digital converter.

13. The method of feature 11 or 12, wherein generating, using the second analog-to-digital converter having inputs coupled across the resistive element, the representation of the first current and the representation of the second current includes:
generating a first voltage in response to the first current and a second voltage in response to the second current.

14. The method of feature 13, wherein determining a temperature of the semiconductor device using the ratio of the representation of the first current and the representation of the second current; the first p-n junction difference voltage; and the second p-n junction difference voltage includes:
determining the temperature of the bipolar junction transistor using:

using a ratio of the first voltage and the second voltage;
the first base-emitter difference voltage; and
the second base-emitter difference voltage.

15. The method of any of features 9 to 14, wherein the semiconductor device is a diode, wherein the first p-n junction difference voltage is a first difference voltage between an anode and a cathode, and wherein the second p-n junction difference voltage is a second difference voltage between the anode and the cathode.

16. A temperature sensor device for determining a temperature of a diode having an anode and a cathode, the temperature sensor device comprising:

a programmable current source configured for generating a first current and a second current;
a first analog-to-digital converter having inputs coupled with the anode and the cathode and configured for determining a first difference voltage in response to the first current and a second difference voltage in response to the second current; and
a control circuit configured for:

receiving a representation of the first current, a representation of the second current, the first difference voltage, and the second difference voltage;
determining a temperature of the diode using:

a ratio of the representation of the first current and the representation of the second current;
the first difference voltage; and
the second difference voltage; and

generating an output signal representing the determined temperature of the diode.

17. The temperature sensor device of feature 16, comprising:

a resistive element having a first terminal and a second terminal, wherein the first terminal is coupled with the programmable current source and the second terminal is coupled with an anode of the diode; and
a second analog-to-digital converter having inputs coupled across the resistive element and configured for generating the representation of the first current and the representation of the second current.

18. The temperature sensor device of feature 17, wherein the first analog-to-digital converter and the second analog-to-digital converter are the same analog-to-digital converter, the temperature sensor device further comprising: a multiplexer coupled with the first terminal of the resistive element, the second terminal of the resistive element, the anode, and the cathode and configured for selectively outputting signals to the first analog-to-digital converter.

19. The temperature sensor device of any of features 16 to 18, wherein generating, using the second analog-to-digital converter having inputs coupled across the resistive element, the representation of the first current and the representation of the second current includes generating a first voltage in response to the first current and a second voltage in response to the second current, and

wherein the control circuit configured for determining the temperature of the diode using the ratio of the representation of the first current and the representation of the second current; the first difference voltage; and the second difference voltage is configured for:
determining the temperature of the diode using:

    using a ratio of the first voltage and the second voltage,
    the first difference voltage; and
    the second difference voltage.

20. The temperature sensor device of feature 19, wherein the diode is a 2-terminal diode.

## Claims

1.  A temperature sensor device for determining a temperature of a semiconductor device, the temperature sensor device comprising:

    a programmable current source configured for generating a first current and a second current;
    a first analog-to-digital converter having inputs coupled with a first terminal and a second terminal of the semiconductor device and configured for determining a first p-n junction difference voltage in response to the first current and a second p-n junction difference voltage in response to the second current; and
    a control circuit configured for:

        receiving a representation of the first current, a representation of the second current, the first p-n junction difference voltage, and the second p-n junction difference voltage;
        determining a temperature of the semiconductor device using:

            a ratio of the representation of the first current and the representation of the second current;
            the first p-n junction difference voltage; and
            the second p-n junction difference voltage; and

        generating an output signal representing the determined temperature.

2.  The temperature sensor device of claim 1, wherein the semiconductor device is a bipolar junction transistor, wherein a first p-n junction difference voltage is a first base-emitter difference voltage, and wherein the second p-n junction difference voltage is a second base-emitter difference voltage.

3.  The temperature sensor device of claim 2, comprising:

    a resistive element having a first terminal and a second terminal,
    wherein the first terminal is coupled with the programmable current source and the second terminal is coupled with one of a base terminal, a collector terminal, or an emitter terminal; and
    a second analog-to-digital converter having inputs coupled across the resistive element and configured for generating the representation of the first current and the representation of the second current.

4.  The temperature sensor device of claim 3, wherein the first analog-to-digital converter and the second analog-to-digital converter are the same analog-to-digital converter, the temperature sensor device further comprising: a multiplexer coupled with the first terminal of the resistive element, the second terminal of the resistive element, the base terminal, and the emitter terminal and configured for selectively outputting signals to the first analog-to-digital converter.

5. The temperature sensor device of claim 3 or 4, wherein the representation of the first current is a first voltage and the representation of the second current is a second voltage; wherein optionally: the control circuit is configured for determining the temperature of the semiconductor device using the ratio of the representation of the first current and the representation of the second current; the first p-n junction difference voltage; and the second p-n junction difference voltage is configured for:
determining the temperature of the bipolar junction transistor using:

using a ratio of the first voltage and the second voltage,
the first base-emitter difference voltage; and
the second base-emitter difference voltage.

6. The temperature sensor device of any of claims 3 to 5, wherein the second terminal of the resistive element is coupled with the emitter terminal.

7. The temperature sensor device of any of claims 1 to 6, wherein the semiconductor device is a diode, wherein the first p-n junction difference voltage is a first difference voltage between an anode and a cathode, and wherein the second p-n junction difference voltage is a second difference voltage and the anode and the cathode.

8. A method of sensing a temperature of a semiconductor device, the method comprising:

generating a first current and a second current;
generating, using a first analog-to-digital converter, a first p-n junction difference voltage in response to the first current and a second p-n junction difference voltage in response to the second current;
receiving a representation of the first current, a representation of the second current, the first p-n junction difference voltage, and the second p-n junction difference voltage;
determining the temperature of the semiconductor device using:

a ratio of the representation of the first current and the representation of the second current;
the first p-n junction difference voltage; and
the second p-n junction difference voltage; and

generating an output signal representing the determined temperature of the semiconductor device.

9. The method of claim 8, wherein the semiconductor device is a bipolar junction transistor, wherein first p-n junction difference voltage is a first base-emitter difference voltage, and wherein the second p-n junction difference voltage is a second base-emitter difference voltage.

10. The method of claim 9, comprising:

coupling a first terminal of a resistive element with a programmable current source and a second terminal of the resistive element with one of a base terminal, a collector terminal, or an emitter terminal; and
generating, using a second analog-to-digital converter having inputs coupled across the resistive element, the representation of the first current and the representation of the second current.

11. The method of claim 10, wherein the first analog-to-digital converter and the second analog-to-digital converter are the same analog-to-digital converter, the method further comprising:

coupling a multiplexer with inputs of the first analog-to-digital converter and with the first terminal of the resistive element, the second terminal of the resistive element, and the emitter terminal; and
selectively outputting signals from the multiplexer to the first analog-to-digital converter.

12. The method of claim 10 or 11, wherein generating, using the second analog-to-digital converter having inputs coupled across the resistive element, the representation of the first current and the representation of the second current includes:
generating a first voltage in response to the first current and a second voltage in response to the second current; wherein optionally determining a temperature of the semiconductor device using the ratio of the representation of the first current and the representation of the second current; the first p-n junction difference voltage; and the second p-n junction difference voltage includes:
determining the temperature of the bipolar junction transistor using:

   using a ratio of the first voltage and the second voltage;
   the first base-emitter difference voltage; and
   the second base-emitter difference voltage.

13. The method of any of claims 8 to 12, wherein the semiconductor device is a diode, wherein the first p-n junction difference voltage is a first difference voltage between an anode and a cathode, and wherein the second p-n junction difference voltage is a second difference voltage between the anode and the cathode.

14. A temperature sensor device for determining a temperature of a diode having an anode and a cathode, the temperature sensor device comprising:

   a programmable current source configured for generating a first current and a second current;
   a first analog-to-digital converter having inputs coupled with the anode and the cathode and configured for determining a first difference voltage in response to the first current and a second difference voltage in response to the second current; and
   a control circuit configured for:

      receiving a representation of the first current, a representation of the second current, the first difference voltage, and the second difference voltage;
      determining a temperature of the diode using:

         a ratio of the representation of the first current and the representation of the second current;
         the first difference voltage; and
         the second difference voltage; and

      generating an output signal representing the determined temperature of the diode.

15. The temperature sensor device of claim 14, comprising:

   a resistive element having a first terminal and a second terminal, wherein the first terminal is coupled with the programmable current source and the second terminal is coupled with an anode of the diode; and
   a second analog-to-digital converter having inputs coupled across the resistive element and configured for generating the representation of the first current and the representation of the second current.

**FIG. 1**

**FIG. 2**

**FIG. 3**

EP 4 671 713 A1

FIG. 4

EP 4 671 713 A1

**FIG. 5**

EP 4 671 713 A1

600

602

Generate a first current and a second current

604

Generate a first P-N junction difference voltage in response to the first current and a second P-N junction difference voltage in response to the second current

606

Receive a representation of the first current, a representation of the second current, the first P-N junction difference voltage, and the second P-N junction difference voltage

608

Determine the temperature of the semiconductor device using:

1) A ratio of the representation of the first current and the representation of the second current;

2) The first P-N junction difference voltage; and

3) The second P-N junction difference voltage

610

Generate an output signal representing the determined temperature of the semiconductor device

FIG. 6

Europäisches
Patentamt
European
Patent Office
Office européen
des brevets

# EUROPEAN SEARCH REPORT

**Application Number**

EP 25 18 4544

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 198 474 A1 (NXP BV [NL]) 21 June 2023 (2023-06-21) * abstract * * figures 1-4B * * paragraphs [0027] - [0105] * ----- | 1-15 | INV. G01K7/01 |
| A | US 11 181 426 B1 (CULLEN EDWARD [IE] ET AL) 23 November 2021 (2021-11-23) * abstract * * column 4, line 4 - column 15, line 47; figures 1-3, 7 * ----- | 1-15 | |

**TECHNICAL FIELDS SEARCHED (IPC)**

G01K

The present search report has been drawn up for all claims

| Place of search | Date of completion of the search | Examiner |
|---|---|---|
| The Hague | 28 October 2025 | Totò, Nicola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

# EP 4 671 713 A1

## ANNEX TO THE EUROPEAN SEARCH REPORT
## ON EUROPEAN PATENT APPLICATION NO.

EP 25 18 4544

28-10-2025

| Patent document cited in search report | | Publication date | Patent family member(s) | | Publication date |
|---|---|---|---|---|---|
| EP 4198474 | A1 | 21-06-2023 | EP | 4198474 A1 | 21-06-2023 |
|  |  |  | US | 2023184594 A1 | 15-06-2023 |
| US 11181426 | B1 | 23-11-2021 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63664567, Michael K. Mayes